# EUROPÄISCHE PATENTANMELDUNG

(11) **EP 0 530 548 A1**
(43) Veröffentlichungstag der Anmeldung: **10.03.1993**
(21) Anmeldenummer: 92113645.3
(22) Anmeldetag: 11.08.1992
(51) Int. Cl.: C04B 18/10, C04B 28/02

(54) **Verfahren zur Überführung von schadstoffbelasteten Rückständen aus Verbrennungsanlagen in eine feste, unbedenklich deponierbare Form**

(30) Priorität: 05.09.1991 DE 4129488
(71) Anmelder: Drews, Gottfried, Dr., D-92421 Schwandorf (DE)
(72) Erfinder: Drews, Gottfried, Dr., D-92421 Schwandorf (DE)
(74) Vertreter: Müller-Wolff, Thomas, Dipl.-Ing.

(57) **Zusammenfassung**

Es soll ein Verfahren zur Überführung schadstoffbelasteter, CaCl₂-reicher Rauchgasreinigungsrückstände entwickelt werden, das die Deponierung zusammen mit Rotschlamm in fester Form erlaubt. Weiterhin soll es möglich sein, in dieses Material zusätzlich weitere schadstoffbelastete Feststoffe, wie z.B. die primären Schlacken und Aschen aus Verbrennungsanlagen, kontaminierter Böden, Strahlsande etc. einzubinden. Dabei soll das erzeugte Material ausreichende mechanische Stabilität aufweisen. Die Eluierbarkeit der enthaltenen Schadstoffe soll soweit abgesenkt werden, daß eine unbedenkliche, oberflächliche Lagerung auf Deponien möglich wird.

Diese Aufgabe wir gelöst durch das erfindungsgemäße Verfahren mit den Merkmalen des Hauptanspruchs. Vorteilhafte Ausgestaltungen des erfindungsgemäßen Verfahrens ergeben sich aus den Unteransprüchen.

Als Lösung wird vorgeschlagen, daß das Verfahren zur Überführung von schadstoffbelasteten Rückständen aus Verbrennungsanlagen unter Verwendung von Rotschlamm und Zement in eine feste, unbedenklich deponierbare Form folgende Schritte umfaßt
a) Vermischen von CaCl₂-reichen Rückständen, insbesondere aus der trockenen Rauchgasreinigung von Verbrennungsanlagen, zusammen mit Rotschlamm, Zement und CaO zu einer Bindermischung
b) Anrühren der Mischung mit Wasser zu einer gießfähigen Masse
c) Vergießen und/oder Verpressen der gießfähigen Masse zu Formkörpern oder Ausbringen der gießfähigen Masse, z.B. durch Verpumpen, unter anschließender Erstarrung und Abbindung zu festen Körpern.

## Beschreibung

Die vorliegende Erfindung betrifft ein Verfahren zur Überführung von schadstoffbelasteten Rückständen aus Verbrennungsanlagen unter Verwendung von Rotschlamm und Zement und CaO in eine feste, unbedenklich deponierbare Form.

In industriellen Verbrennungsanlagen, insbesondere bei der Verbrennung von Müll oder in Kohlekraftwerken, fallen erhebliche Mengen schadstoffbelasteter Rückstände an. Dies sind zum einen die Rückstände aus der Abgasreinigung derartiger Verbrennungsanlagen. Bei dieser Abgasreinigung entstehen im wesentlichen Calcium-Salze, vornehmlich Chloride oder Sulfate, die u. a. die in den verbrannten Stoffen (Müll bzw. Kohle) enthaltenen Schadstoffe, insbesondere Schwermetalle, in aufkonzentrierter Form aufweisen. Weitere Rückstände solcher Verbrennunganlagen sind die primären Schlacken und Aschen, in denen ebenfalls die vorlaufenden Schadstoffe angereichert sind. Die Rückstände fallen im wesentlichen in feiner Form mit großer Oberfläche an. Daher sind die enthaltenen Schadstoffe, insbesondere die Schwermetalle und auch die Calcium-Verbindungen, in hohem Maße mit Wasser eluierbar. Derartige Rückstände müssen daher als Sondermüll auf entsprechenden Sonderdeponien gelagert werden und belasten hier die vorhandenen geringen Kapazitäten.

Um die genannten Rückstände auf oberirdischen Deponien unbedenklich lagern zu können, muß die Eluierbarkeit der Schadstoffe deutlich abgesenkt werden.

Dies gelingt z.B. durch Überführung derartiger Rückstände mit Hilfe von Bindemitteln in feste Formkörper mit ausreichender mechanischer Stabilität und möglichst geringer Oberfläche.

Ein Verfahren zur Verfestigung von Rauchgasreinigungsrückständen ist bekannt nach DE 30 37 995. Dabei werden im wesentlichen aus Calciumsulfat bestehende Rauchgasreinigungsrückstände mit Rotschlamm, Zement, Tonen und Kiesen sowie geringen Mengen an Calciumchlorid gemischt. Die Mischung wird ausgebracht und anschließend ohne Wärmezufuhr zum Erstarren gebracht. Nach dem hier vorgeschlagenen Verfahren können allerdings keine Rückstände verarbeitet werden, die im wesentlichen aus Calciumchlorid bestehen. Beim Einsatz derartiger Rückstände würde die Mischung unter den angegebenen Bedingungen bereits während des Mischvorganges erstarren, da CaCl₂ als starker Beschleuniger für die Zementverfestigung wirkt. Aufgrund örtlicher Blitzerstarrung würden inhomogene Körper mit allenfalls geringer Stabilität entstehen. Eine ausreichende Absenkung der Schadstoffeluierbarkeit ist dabei nicht zu erzielen. Zudem besteht kaum eine Möglichkeit zur Einbindung der eingangs genannten primären Verbrennungsrückstände (Aschen und Schlacken).

Aufgabe der vorliegenden Erfindung ist es, ein Verfahren zu entwickeln, das die Überführung schadstoffbelasteter, CaCl₂-reicher Rauchgasreinigungsrückstände zusammen mit Rotschlamm in ein festes, unbedenklich deponierbares Material erlaubt. Weiterhin soll es möglich sein, in dieses Material zusätzlich weitere schadstoffbelastete Feststoffe, wie z.B. die primären Schlacken und Aschen aus Verbrennungsanlagen, kontaminierter Böden, Strahlsande etc. einzubinden. Dabei soll das erzeugte Material ausreichende mechanische Stabilität aufweisen. Die Eluierbarkeit der enthaltenen Schadstoffe soll soweit abgesenkt werden, daß eine unbedenkliche, oberflächliche Lagerung auf Deponien möglich wird.

Diese Aufgabe wird gelöst durch das erfindungsgemäße Vefahren mit den Merkmalen des Hauptanspruchs. Vorteilhafte Ausgestaltungen des erfindungsgemäßen Verfahrens ergeben sich aus den Unteransprüchen.

Nach dem erfindungsgemäßen Verfahren wird zunächst eine Bindermischung hergestellt, bestehend aus CaCl₂-reichen Rauchgasreinigungsrückständen, Rotschlamm, Zement und CaO. Diese Bindermischung wird mit Wasser zu einer gießfähigen Masse angerührt. Die erhaltene Masse kann zu Blöcken vergossen bzw. verpreßt werden, oder sie kann unmittelbar am Deponieort großflächig ausgebracht werden durch Verpumpen. Ohne weitere Zusätze bleibt die Masse nur kurzzeitig rührfähig und bindet nach Beendigung des Rührens sehr rasch ab. Der Bindermischung oder der gießfähigen Masse können weitere zu entsorgende Feststoffe, wie z.B. primäre Feinschlacke aus Müllverbrennungsanlagen, als Füllstoffe zugesetzt werden. Dabei ergibt sich überraschenderweise auch bei sehr hohen Füllstoffanteilen von bis zu 80 Gew.-% ein Material mit hoher mechanischer Stabilität und geringer Schadstoffeluierbarkeit.

Für das erfindungsgemäße Verfahren eignen sich insbesondere Rückstände aus der trockenen Rauchgasreinigung mit einem CaCl₂ : CaSO₄-Gewichtsverhältnis ≧ 1,5. Der CaCl₂-Gehalt kann dabei grundsätzlich beliebig hoch sein.

Bedingt durch den hohen CaCl₂-Gehalt der Rauchgasreinigungsrückstände sollten zur Herstellung der Bindermischung vorzugsweise Einsatzstoffe mit lediglich geringem Feuchtigkeitsgehalt verwendet werden. Enthalten die Einsatzstoffe hohe Anteile an Wasser bzw. Feuchtigkeit, kann eine Erstarrung der Mischung bereits beim Mischvorgang erfolgen, bevor eine ausreichend homogene Vermischung der Einsatzstoffe erzielt werden kann. Dies ist bedingt durch die Beschleunigungswirkung des CaCl₂ auf die Zementverfestigung. Unter diesen Bedingungen erfolgt aufgrund der inhomogenen Verteilung der Reaktionsstoffe eine örtlich begrenzte, blitzartige Erstarrung. In diesem Fall ist weder eine ausreichende Stabilität des Endproduktes noch eine zuverlässige Einbindung der Schadstoffe und damit eine Absenkung der Eluierbarkeit gewährleistet. Liegen Ausgangstoffe mit hohem Feuchtigkeitsgehalt vor, sollten sie daher vor der Vermischung getrocknet werden.

Dies gilt insbesondere bei Einsatz von feuchtem Rotschlamm oder Rückständen aus der nassen Rauchgasreinigung. Trockene bzw. getrocknete Ausgangsstoffe können nach dem erfindungsgemäßen Verfahren in einem Mischer beliebiger Art vermischt werden. Bei Ausgangsstoffen mit geringen Feuchtigkeitsgehalten ist ggf. ein Zwangsmischer zu verwenden.

Die Zusammensetzung der trockenen Bindermischung ist grundsätzlich in weiten Grenzen frei wählbar. Als besonders günstig haben sich die folgenden Zusammensetzungsbereiche erwiesen:
20 - 40 Gew.-% CaCl₂-reiche Rückstände (als Trockenmaterial)
20 - 40 Gew.-% Rotschlamm (als Trockenmaterial)
10 - 20 Gew.-% Zement
und 10 - 20 Gew.-% CaO
Der Zement- und CaO-Gehalt kann zumindest teilweise ersetzt werden durch hydraulisch wirkende Flugasche aus der Kohleverbrennung oder andere hydraulische Komponeten, wie z.B. Puzzolane, Trass, Thurament oder gemahlene Hochofenschlacke.

Falls erforderlich, können der Bindermischung oder der gießfähigen Masse übliche Modifikatoren oder Betonzusatzmittel, wie z.B. Verflüssiger, Verzögerer, Dichtungsmittel, Einpreßhilfen oder organische Zusatzstoffe zugesetzt werden.

Durch Zusatz von Abbindeverzögerern zum eingesetzten Zement kann das Abbindeverhalten der Mischung positiv beeinflußt werden. Hier eignen sich zum Beispiel Melaminharze, Zucker etc. Diese Maßnahme kann z.B. bei sehr hohen CaCl₂-Gehalten notwendig sein, um eine zu schnelle Zementverfestigung zu verhindern.

Die durch intensives Vermischen der trockenen Einsatzstoffe hergestellte Bindermischung wird anschließend mit Wasser zu einer gießfähigen Masse verrührt. Die zugegebene Wassermenge wird dabei vorzugsweise so eingestellt, daß das Massenverhältnis von Wasser zu den Trockenbestandteilen der Bindermischung zwischen 0,5 und 1,5 liegt.

Unterhalb eines Massenverhältnisses von 0,5 wird die Masse (ohne Zugabe von Verflüssigungshilfsmitteln) zu schnell fest. Oberhalb eines Massenverhältnisses von 1,5 ist die gießfähige Masse zu dünnflüssig. In diesem Fall erfolgt das Abbinden sehr langsam. Gleichzeitig wird nur eine geringe Endfestigkeit erreicht.

Bei geringer Wasserzugabe wird eine sehr schnell abbindende Masse erhalten. Bei höherem Wassergehalt verhält sich die Mischung über eine gewisse Zeit thixotropähnlich und erstarrt nach Beendigung des Rührens in wenigen Minuten gallertartig. Danach setzt die Zementverfestigung in bekannter Weise ein.

Die gießfähige Masse aus der reinen Bindermischung wird vorzugsweise zu Formkörpern, wie Blöcken oder Steinen, vergossen bzw. verpreßt. Sie kann aber auch unmittelbar am Deponieort großflächig verpumpt werden. Anschließend erfolgt die Verfestigung durch Trocknung und Abbindung an Luft ohne Wärmezufuhr. Die Abbindezeit bis zur Entformbarkeit liegt zwischen einigen Minuten und etwa 1 Stunde. Nach der Verfestigung weist das Material eine ausreichende mechanische Stabilität und eine sehr geringe Eluierbarkeit der Schadstoffe auf.

Ein besonderer Vorteil des erfindungsgemäßen Verfahrens ist die Möglichkeit, weitere zu entsorgende Feststoffe als Füllstoffe in die Masse einzubinden. Diese Feststoffe können der Bindermischung oder der gießfähigen Masse in einer Menge von bis zum 6-fachen der Masse des Trockenanteils der Bindermischung zugegeben werden. Derartige Feststoffe können z.B. Schlacken aus Verbrennungsanlagen, kontaminierte Strahlmittel oder auch schwermetallbelastete Böden, z.B. von Kokereien, Hütten oder Schrottplätzen, sein. Als besonders geeignet für das erfindungsgemäße Verfahren hat sich Feinschlacke aus Müllverbrennungsanlagen erwiesen.

Durch die Zugabe hoher Anteile derartiger Füllstoffe wird die Abbindung an Luft bei Raumtemperatur erheblich verzögert oder sogar ganz unterbunden. Erst bei äußerer Wärmezufuhr setzt die Abbindung ein. Die Wärmezufuhr erfolgt vorzugsweise durch Aufheizen der Füllstoffe vor dem Einrühren auf eine Temperatur zwischen Raumtemperatur und 90 °C. Eine weitere Möglichkeit ist es, die mit den Füllstoffen versehene Gesamtmischung nach dem Vergießen auf eine Temperatur bis zu 90° C aufzuheizen.

Wird z. B. Feinschlacke mit Raumtemperatur in eine Mischung eingerührt, die ohne Schlackezugabe bereits nach 1 h abbinden würde, erfolgt auch nach 3 Tagen noch keine Abbindung. Wird die Feinschlacke allerdings mit einer Temperatur von 85 °C in eine vergleichbare Mischung eingerührt, liegt die Abbindezeit bei etwa 1 h. Dabei ist mit zunehmendem Anteil an Füllstoffen eine höhere Gesamtenergie-Zufuhr notwendig.

Durch die Zugabemenge sowie die Temperatur der Füllstoffe läßt sich dementsprechend das Abbindeverhalten der Mischungen in weiten Grenzen steuern und an beliebige Anwendungsfälle anpassen. Eine deutlich verlängerte Abbindezeit kann z. B. dann erforderlich sein, wenn die fertig angerührte Masse zunächst flüssig zum Deponieort transportiert und dort vergossen bzw. verpumpt werden soll.

Auch das mit Füllstoffen versehene Material weist nach der Verfestigung eine ausreichend hohe mechanische Stabilität auf. Dies gilt überraschenderweise auch bei sehr hohen Füllstoffgehalten von bis zu 80 Gew-.% bezogen auf die feuchte Gesamtmischung. Die Eluierbarkeit ist trotz der zusätzlichen Schadstoffe in den Füllstoffen so gering, daß eine unbedenkliche Lagerung des Materials auf oberflächlichen Deponien erfolgen kann.

Das verfestigte Material (mit oder ohne Füllstoffe) kann abschließend einer Oberflächenbehandlung, wie z.B. Hydrophobierung bzw. Versiegelung, unterzogen werden. Eine derartige Versiegelung kann z.B. erfolgen durch Imprägnierung mit einer Emulsion aus Silikon-Harzen. Auf diese Weise wird die Schadstoffeluierbarkeit noch weiter abgesenkt.

Mit dem erfindungsgemäßen Verfahren gelingt es, schadstoffbelastete Rückstände aus Verbrennungsanlagen zu verfestigen. Dabei können zum einen Rauchgasreinigungsrückstände mit sehr hohem CaCl₂-Gehalt verarbeitet werden. Gleichzeitig können auch primäre Verbrennungsrückstände (z. B. Schlacken) in sehr hoher Menge in das verfestigte Material eingebunden werden. Die Verfestigung erfolgt durch Zusätze an Zement, CaO und Rotschlamm. Durch die Verfestigung wird die Schadstoffeluierbarkeit deutlich abgesenkt. Der Eisenhydroxid-Gehalt des zugesetzten Rotschlamms wirkt dabei zusätzlich als Absorptionsmittel für Schwermetalle bzw. als Reduktionsmittel für Metallionen, die elektrochemisch edler sind und trägt damit zu einer weiteren Absenkung der Eluierbarkeit der Schwermetall-Schadstoffe bei. Die nach dem erfindungsgemäßen Verfahren verfestigten Rückstände können daher unbedenklich auf oberflächlichen Deponien gelagert werden.

Nachfolgend wird das erfindungsgemäße Verfahren anhand von ausgewählten Verfahrensbeispielen weiter erläutert.

### Beispiel 1

2 kg eines CaCl₂-reichen Rückstandes (Filterstaub) aus der trockenen Abgasreinigung einer Müllverbrennungsanlage mit ca. 45 Gew.-% CaCl₂ und einem CaCl₂ : CaSO₄-Gewichtsverhältnis von ca. 2,6 : 1 wurden mit 2 kg getrocknetem Rotschlamm (typ. Zusammensetzung s. Tab. 1) sowie einem Gemenge aus 1 kg Zement und 1 kg CaO intensiv vermischt.

**Tab.1**

| Typische Zusammensetzung des verwendeten Rotschlamms | |
|---|---|
| Chemische Analyse | (Gew.-% Trockensubstanz) |
| Al₂O₃ | 22 - 28 |
| Fe₂O₃ | 25 - 35 |
| SiO₂ | 6 - 16 |
| TiO₂ | 8 - 24 |
| Na₂O_{(ges.)} | 4 - 9 |
| Na₂O_{(lösl.)} | 0,5 - 0,7 |
| CaO/MgO | 0,5 - 4 |
| Glühverlust | 7 - 12 |
| mittl. Korngröße D₅₀ = 1 - 2,5 µm | |

In diese trockene Mischung wurden 5,5 l Wasser eingerührt. Da in diesem Fall ausschließlich trockene Ausgangsstoffe verwendet werden, kann zur Vermischung ein beliebiger Mischer eingesetzt werden.

Die auf diese Weise erhaltene Masse ist unter Rühren etwa 10 bis 20 min. gießfähig. Die Masse wurde in entsprechenden Formen zu Blöcken vergossen. Die primäre Erstarrung erfolgte dann innerhalb von ca. 30 min. ohne äußere Wärmezufuhr. Nach Abschluß der weiteren Zementverfestigung wiesen die lufttrockenen Formkörper eine Festigkeit und Dichte im Bereich von Hüttenbims-Beton oder Hochofenschlacken-Beton (Dichte 800 - 1000 mg/m³, Druckfestigkeit 500 kN/m²) aus gekörnter poriger Hochofenschlacke (nach DIN 4108) auf. Zur Bestimmung der Eluierbarkeit der Schadstoffe nach DEV S 4 (Deutsches Einheitsverfahren zur Wasser-, Abwasser- und Schlammuntersuchung) wurden die Blöcke auf eine Korngröße von max. 40 mm zerschlagen und 200 g in 2 l Wasser 24 h in einem Behälter mit 1 U/min. umgewälzt. Hierbei wurden die Bruchstücke ebenso wie in einem Parallelversuch Bruchstücke von Hohlloch-Ziegeln fast vollständig zerrieben. Die fast vollständige autogene Vermahlung des im Parallelversuch mitgeführten Hohlloch-Ziegels zeigt die extreme Belastung der Prüfkörper, die weit über die bei der statischen Lagerung bei deren bestimmungsgemäßen Zweck, der Deponierung ursprünglich leichtlöslicher, pulverförmiger und/oder schadstoffbelasteter Feststoffe zu erwarten ist.

Das so gewonnene Eluat wurde zur Abtrennung des aufgemahlenen Feststoffes filtriert und im klaren Filtrat der Abdampfrückstand (= Masse der gelösten Stoffe) sowie Cl⁻, Cd, Zn, Cu, Cr, Ni und Pb als Leitelemente bestimmt. In gleicher Weise wurde der als Ausgangsstoff eingesetzte Filterstaub behandelt.

Tab. 2 zeigt die im filtrierten Eluat ermittelten Schadstoff-Gehalte des reinen Filterstaubes und der erzeugten Blöcke.

**Tab.2**

| Eluat-Gehalte | | |
|---|---|---|
| | a) Filterstaub | b) Produkt-Formkörper |
| Abdampfrückstand | 56,1 g/l | 13,4 g/l |
| Cl⁻ | 28,7 g/l | 6,8 g/l |
| Cd | < 0,01 mg/l | < 0,01 mg/l |
| Zn | 7,1 mg/l | 0,1 mg/l |
| Cu | 0,16 mg/l | 0,04 mg/l |
| Cr | < 0,01 mg/l | < 0,01 mg/l |
| Ni | < 0,02 mg/l | < 0,01 mg/l |
| Pb | 91,8 mg/l | 0,4 mg/l |

Bei der Bewertung des Ergebnisses sind u.a. folgende Mechanismen in Betracht zu ziehen:
- Lösen der wasserlöslichen Salze
- Hydratisierung der Kationen
- Ausbildung der Calciumsilikat-Hydrat-Phasen aus dem Zement
- Mineral-Neubildung aus dem im Rotschlamm enthaltenen Hydroxid-Sodalith mit Ca(OH)₂
- Adsorptive Fixierung gelöster Ionen an Fe(OH)₃ des Rotschlamms.

Der eingesetzte Rückstand der trockenen Rauchgasreinigung (Filterstaub) entsprach folgender Richtanalyse:

| | |
|---|---|
| CaO gesamt | 38,8 Gew.-% |
| CaO frei | 8,5 " |
| Cl⁻ | 29,1 " |
| SO₄ ²⁻ | 12,4 " |
| F⁻ | 0,23 ". |

Aus diesen Werten ist ein CaCl₂ : CaSO₄-Gewichtsverhältnis von ca. 2,6 : 1 abzuleiten. Das Calcium liegt überwiegend als leicht lösliches CaCl₂ vor; es darf angenommen werden, daß auch die Schwermetalle überwiegend in ihrer leicht löslichen Chloridform vorliegen.

Beim Anteigen des Gemisches mit Wasser werden CaCl₂ und die Metallchloride ebenso wie das in der Mischung enthaltene CaO spontan in Lösung gehen. In der stark alkalischen Lösung bilden sich z.T. schwerlösliche Metall-Hydroxide, die einerseits von dem feinteiligen Fe(OH)₃ des Rotschlamms absorbiert, andererseits zusammen mit den Fe(OH)₃ in das sich rasch ausbildende Kristallgefüge eingebaut wurden. Hier wirkt das CaCl₂ in bekannter Weise als extremer Abbindebeschleuniger für die neugebildeten Zementphasen. Inwieweit eine Einbindung der Metallionen in die neugebildeten Phasen stattfindet, kann nicht genau belegt werden.

Daß nicht allein das alkalische Milieu mit der Ausbildung von Metallhydroxiden für das Rückhaltevermögen der Mischung verantwortlich sein kann, belegt ein Vergleich der tatsächlich im Eluat der verfestigten Masse gefundenen Elementgehalte mit den bei der nahezu vollständigen Aufmahlung und der dabei eintretenden Elution zu erwartenden Werten, wenn allein mechanische Einbindung in das Kristallgefüge stattfinden würde.

In dem ausgehärteten Formkörper ist der Filterstaub zu ca. 25 % der Gesamtmasse vorhanden. Bei Elution gleicher Massen von Filterstaub und ausgehärteter Masse sollte dann das Eluat der Masse ca. 25 % der Gehalte des Eluats des Filterstaubes aufweisen. Für die im Filterstaub in höheren Konzentrationen vorhandenen Elemente Zn und Pb trifft dies jedoch nicht zu:

| | Zn | Pb |
|---|---|---|
| Im Eluat des Filterstaubs enthalten (= 100 %) | 7,1 mg/l | 91,8 mg/l |
| bei völliger Elution zu erwarten (= 25 %) | 1,78 mg/l | 22,95 mg/l |
| tatsächlich gefunden | 0,1 mg/l | 0,4 mg/l |
| Reduzierung der Eluierbarkeit | 1 : 17,8 | 1 : 57,4 |

Da bereits das Eluat des reinen Filterstaubes einen pH-Wert von 12 aufweist, kann auch die alleinige Bildung von filtrierbaren Metallhydroxiden im Zement/CaO/Rotschlamm-Gemisch nicht zur alleinigen Erklärung des Rückhaltevermögens dieses Gemisches herangezogen werden, da sich diese Hydroxide in ebenfalls filtrierbarer Form auch im Eluat des reinen Filterstaubes ausgebildet hätten.

### Beispiel 2

Je kg der im Beispiel beschriebenen Einsatzstoffe Filterstaub, Rotschlamm und Zement/CaO-Gemisch (Zement : CaO = 1 : 1) werden zusammen mit 18 kg Müllkraftwerks-Feinschlacke bei Raumtemperatur trocken vermischt und mit 2,75 l Wasser angeteigt. Das Mischungsverhältnis des Bindergemisches entspricht dem im Beispiel 1.

Die mit Schlacke versetzte, mit Wasser angeteigte Masse erstarrte auch nach 3 Tagen noch nicht und blieb rührfähig. Nach mehrstündiger Lagerung bei 85 °C im Trockenschrank erstarrte die Mischung zu einem festen Körper.

### Beispiel 3

Eine gleiche Bindermischung wie im Beispiel 2 wurde nach dem Anteigen mit Wasser mit zuvor auf 85 °C aufgeheizter Schlacke versetzt. Diese Mischung erstarrt in gleicher Weise wie die reine Bindermischung aus Beispiel 1.

Diese rasche Erstarrung bei Zufügung vorgewärmter Zuschlagstoffe ist reproduzierbar. So erstarrt eine Masse aus je 200 g des bereits erwähnten Filterstaubes, Rotschlamms und Zement/CaO-Gemisches (trocken) zusammen mit 1800 g kontaminiertem, auf ca. 50 °C aufgewärmtem Strahlsand in gleicher Weise wie das reine Bindergemisch. Offensichtlich ist also zur Initiierung der zur Erstarrung führenden Kristallisation die Überwindung einer Engergieschwelle erforderlich, die das modellhafte Bindergemisch durch die bei der Benetzung mit Wasser freiwerdende Hydrationswärme aufbringt. Zu hohe Mengen kalter Zuschlagstoffe absorbieren offensichtlich zuviel Energie, um das erforderliche Temperaturniveau für die Gesamtmischung zu erreichen.

### Beispiel 4

Die Einsatzstoffe:
- 40 kg: haldentrockener Rotschlamm (Feuchte ca. 25 %)
- 50 kg: CaCl₂-haltiger Filterstaub aus der trockenen Rauchgasreinigung der Müllverbrennung mit 7,75 kg freiem CaO
- 16,5 kg: Zement
- 33 kg: Flugasche aus der Kohleverbrennung (aus der Rauchgasreinigung eines Kraftwerkes)
- 33 kg: Feinschlacke (Rückstand aus der Müllverbrennung)
werden mit ca. 60 l Wasser zu einer gießfähigen Masse vermengt. Der verwendete Filterstaub hat einen CaCl₂-Gehalt von 21 Gew.-% bei einem Verhältnis von CaCl₂ : CaSO₄ = 1,52.

Da hier auch feuchte Ausgangsstoffe (Rotschlamm) eingesetzt werden, ist die Verwendung eines Zwangsmischers empfehlenswert, um eine frühzeitige Verfestigung der Mischung zu vermeiden. Die gießfähige Masse wird dann zu einem ca. 0,5 x 0,5 x 0,5 m großen Block unter Einsatz eines Betonrüttlers vergossen. Die Primärerstarrung setzte unter Erwärmung in ca. 1 Std. ein. Nach ca. 20 Std. ließ sich der Block problemlos entformen. Bei der intensiven Trockung durch 2-tägige Lagerung bei 80 °C im Trockenschrank trat ca. 10 % Wasserverlust ein und es schied sich eine dünne, durch leichtes Bürsten gut entfernbare Schicht aus NaCl auf der Oberfläche ab. Die abgeschiedene Menge entsprach lediglich 0,1 % der durch den CaCl₂-haltigen Filterstaub und das Na aus dem Rotschlamm eingebrachten NaCl-Menge. Durch Oberflächentränkung mit einer handelsüblichen Silikon-Emulsion wurde der Block hydrophobiert und konnte bedenkenlos der Witterung ausgesetzt werden.

Das erfindungsgemäße Verfahren führt durch geeignetes Mischen industrieller Rückstände, die je für sich gesehen als einer Sonderentsorgung zuzuführende Problemreste anzusehen sind, mit weniger Zusatzmaterial zu ausreichend festen und auslaugungsbeständigen Festkörpern, die einer oberflächlichen Lagerung mit nur geringen Sicherheitsanforderungen zugängig sind.

Durch das vorgeschlagene Verfahren kann wertvoller - weil sehr rarer - Hochsicherheits-Deponieraum für den wirklichen Problemmüll gespart werden.

Da naturgemäß die industriellen Rückstände einer erheblichen Schwankungsbreite unterliegen, können die angegebenen Beispiele nur als Modellfälle angesehen werden. Im Einzelfall kann eine Optimierung innerhalb des vorgestellten Rahmens erforderlich werden.

## Patentansprüche

1. Verfahren zur Überführung von schadstoffbelasteten Rückständen aus Verbrennungsanlagen unter Verwendung von Rotschlamm und Zement in eine feste, unbedenklich deponierbare Form, dadurch gekennzeichnet, daß das Verfahren die folgenden Schritte umfaßt
a) Vermischen von CaCl₂-reichen Rückständen, insbesondere aus der trockenen Rauchgasreinigung von Verbrennungsanlagen, zusammen mit Rotschlamm, Zement und CaO zu einer Bindermischung
b) Anrühren der Mischung mit Wasser zu einer gießfähigen Masse
c) Vergießen und/oder Verpressen der gießfähigen Masse zu Formkörpern oder Ausbringen der gießfähigen Masse, z. B. durch Verpumpen, unter anschließender Erstarrung und Abbindung zu festen Körpern.

2. Verfahren nach Anspruch 1, dadurch gekennzeichnet, daß die CaCl₂-reichen Rückstände ein Massenverhältnis CaCl₂:CaSO₄ von mindestens 1,5 aufweisen.

3. Verfahren nach einem der vorhergehenden Ansprüche, dadurch gekennzeichnet, daß die Bindermischung bezogen auf den Trockenanteil die folgende Zusammensetzung aufweist:
20-40 Gew.-% CaCl₂-reiche Rückstände (berechnet als Trockenmaterial)
20-40 Gew.-% Rotschlamm (berechnet als Trockenmaterial)
10-20 Gew.-% Zement
und 10-20 Gew.-% CaO.

4. Verfahren nach einem der vorhergehenden Ansprüche, dadurch gekennzeichnet, daß feuchte Ausgangsstoffe vor dem Vermischen getrocket werden.

5. Verfahren nach einem der vorhergehenden Ansprüche, dadurch gekennzeichnet, daß ein Teil des Zement- und CaO-Gehaltes der Bindermischung durch Flugasche aus der Kohleverbrennung oder durch andere hydraulische Komponenten ersetzt wird.

6. Verfahren nach einem der vorhergehenden Ansprüche, dadurch gekennzeichnet, daß der Bindermischung oder der gießfähigen Masse Modifikatoren oder Betonzusatzmittel, wie z. B. Verflüssiger, Verzögerer, Dichungsmittel, Einpreßhilfen oder organische Zusatzstoffe zugesetzt werden.

7. Vefahren nach einem der vorhergehenden Ansprüche, dadurch gekennzeichnet, daß das Massenverhältnis von Wasser zu den Trockenbestandteilen der Bindermischung in der gießfähigen Masse auf einen Wert zwischen 0,5 und 1,5 eingestellt wird.

8. Verfahren nach einem der vorhergehenden Ansprüche, dadurch gekennzeichnet, daß der Bindermischung oder der gießfähigen Masse weitere zu entsorgende Feststoffe, wie z. B. Feinschlacke aus Müllverbrennungsanlagen, kontaminierte Strahlmittel, kontaminierte Böden etc. als Füllstoffe eingerührt werden.

9. Verfahren nach Anspruch 8, dadurch gekennzeichnet, daß die Füllstoffe in einer Menge von bis zum 6-fachen der Masse des Trockenanteils der Bindermischung zugegeben werden.

10. Verfahren nach einem der Ansprüche 8 oder 9, dadurch gekennzeichnet, daß die Füllstoffe vor der Zugabe auf eine Temperatur zwischen Raumtemperatur und 90 °C aufgeheizt werden.

11. Verfahren nach einem der Ansprüche 8 bis 10, dadurch gekennzeichnet, daß die mit Füllstoffen versehene Gesamtmischung nach dem Vergießen, Verpressen oder Ausbringen auf eine Temperatur zwischen Raumtemperatur und 90 °C aufgeheizt wird.

12. Verfahren nach einem der vorhergehenden Ansprüche, dadurch gekennzeichnet, daß die erzeugten festen Körper nach Oberflächentrocknung einer Oberflächenbehandlung, wie z. B. Hydrophobierung bzw. Versiegelung unterzogen werden.
